# EUROPEAN PATENT SPECIFICATION

(11) **EP 2 845 349 B1**
(45) Date of publication and mention of the grant of the patent: **16.08.2017**
(21) Application number: 12875912.3
(22) Date of filing: 30.04.2012
(51) Int. Cl.: H04L 12/26, H04L 12/70, H04L 12/22, H04L 12/24, H04L 29/06

(54) **NETWORK ACCESS APPARATUS HAVING A CONTROL MODULE AND A NETWORK ACCESS MODULE**
NETZWERKZUGANGSVORRICHTUNG MIT STEUERMODUL UND EINEM NETZWERKZUGRIFFSMODUL
APPAREIL D'ACCÈS AU RÉSEAU AYANT UN MODULE DE COMMANDE ET UN MODULE D'ACCÈS AU RÉSEAU

(43) Date of publication of application: 11.03.2015
(73) Proprietor: Hewlett Packard Enterprise Development LP, Houston, TX 77070 (US)
(72) Inventor: SANCHEZ, Mauricio, Roseville, California 95747 (US); CHIU, Jechun, Austin, Texas 78728 (US); CLARK, Charles F., Roseville, California 95747 (US)
(74) Representative: Holt, Daniel Richard
(86) International application number: PCT/US2012/035883
(87) International publication number: WO 2013/165368

(56) References cited:
- US-A1- 2005 235 360
- US-A1- 2007 011 741
- US-A1- 2008 056 487
- US-A1- 2008 222 730
- US-A1- 2010 142 371
- US-A1- 2011 149 776
- US-A1- 2012 023 572

## Description

### BACKGROUND

The objective of network threats, such as botnets, malware, and spyware, is to take ownership of a victim's machine, for instance, to gain access to sensitive information or to mount secondary attacks. In either case, the infected machine oftentimes connects to its "owner", for instance, over the Internet, to transfer stolen information and/or receive new commands. It is typically when an infected machine attempts this connection that the owner of the threat is vulnerable to detection.

US 2005/235360 A1 discloses methods and systems for remotely configuring and monitoring a communication device. A communication device or network appliance compares communications entering the communication device to a list of communication types established as known security risks. If the received communication corresponds to a known security risk, the communication is classified as either a high security risk or low security risk, and an alert signal is transmitted to a remote monitoring center.

### BRIEF DESCRIPTION OF THE DRAWINGS

Features of the present disclosure are illustrated by way of example and not limited in the following figure(s), in which like numerals indicate like elements, in which:
FIG. 1 shows a functional block diagram of a network environment in which a network access apparatus may be implemented, according to an example of the present disclosure;
FIG. 2 shows a simplified block diagram of a network access apparatus depicted in FIG. 1, according to an example of the present disclosure;
FIGS. 3 and 4, respectively, depict flow diagrams of methods for processing packets in a network, according to two examples of the present disclosure; and
FIG. 5 illustrates a schematic representation of a computing device, which may be employed to perform various functions of the network access apparatus depicted in FIGS. 1 and 2, according to an example of the present disclosure.

### DETAILED DESCRIPTION

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure. As used herein, the term "includes" means includes but not limited to, the term "including" means including but not limited to. The term "based on" means based at least in part on. In addition, the terms "a" and "an" are intended to denote at least one of a particular element.

Disclosed herein are a network access apparatus and a method for processing packets. The invention is disclosed in the appended claims. The network access apparatus includes a network access module that is to perform network access functions, such as forward functions, switching functions, etc., and a control module that is to perform inspection and control functions. Particularly, the network access module is to route Ethernet packets, which may include at least one of Spanning Tree (STP), Link Aggregation Control Protocol (LACP), Internet Protocol (IP), etc., types of packets, which are also referred to as "packets" throughout the present disclosure, through a network. By way of example, the network access module is to receive packets containing a request for access to a destination address from a client device and to transmit the packets to the destination address. An additional functionality of the network access module is to determine whether the received packets comprise a predetermined type of communication. In the event that the received packets are determined to comprise the predetermined type of communication or request, the network access module is to instruct the control module to further inspect and act on the packets.

The control module is to determine a feature of the plurality of packets received from the network access module, to determine whether the feature matches a configuration of a plurality of predetermined configurations, and to perform a predefined action on the plurality of packets in response to the feature matching the configuration. According to an example, the feature and the predetermined configurations comprise signatures of applications, signatures of devices, web addresses, IP addresses, etc. By way of particular example, therefore, the network access apparatus may perform, directly within the network, reputation filtering of the IP addresses that client devices are attempting to access through the network.

The configurations may be contained on a configuration structure that is to be updated, for instance, on a regular basis, such that the configurations are kept relevant with current data landscapes. By way of example, the configurations comprise security threats and the control module may determine whether the packets received from client devices are likely security threats. In other examples, the configurations comprise other types of signatures and the control module may determine whether a feature of the packets received from client devices matches any of these types of signatures.

In addition, in response to a determination that a feature of the packets matches a configuration, the control module is to perform a predefined action on the plurality of packets. The predefined action may include, for instance, at least one of modifying, rerouting, dropping, enforcing a specific action on the packets based upon a set policy, etc.

Generally speaking, the network access apparatus may implement application detection, device detection, and/or security threat detection. Particularly, the network access apparatus may implement application fingerprinting and device fingerprinting in combination with security threat detection. In one regard, therefore, the network access apparatus disclosed herein may detect an infected computing device and may determine additional information pertaining to the infected computing device. For instance, the network access apparatus may determine information pertaining to, for instance, the type of application the computing device was running at the time the computing device became infected, as well as the profile of the computing device. This information may be useful in identifying a solution to the infected computing device.

According to an example, a plurality of network access apparatuses may be implemented at the edge of a network to intercept and act upon packets prior to introduction of the packets into the network. In addition, the network access apparatuses are made to be aware of the packets that the network access apparatuses received and to perform more than just switching operations on the packets. In this regard, the network access apparatuses disclosed herein may be considered as being content-aware, in which content-aware may be defined as application-aware, device-aware, botnet-aware, etc.

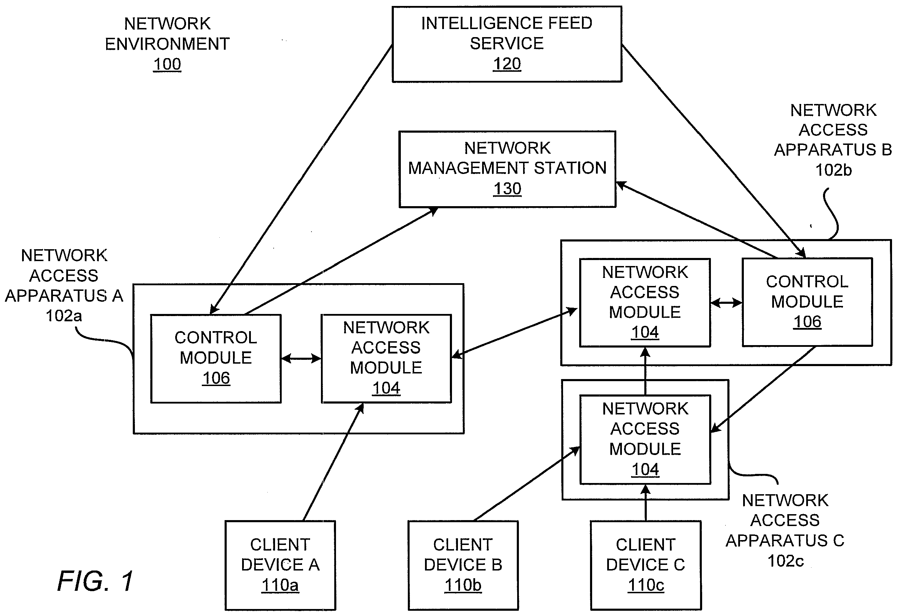

With reference to FIG. 1, there is shown a functional block diagram of a network environment 100, in which a network access apparatus 102a for managing access to a network (not shown), such as, an intranet, the Internet, etc., by client devices 110a-110c may be implemented, according to an example. It should be readily apparent that the diagram depicted in FIG. 1 represents a generalized illustration and that other components may be added or existing components may be removed, modified or rearranged without departing from a scope of the network environment 100. For instance, the network environment 100 may include additional network access apparatuses and any number of client devices.

The network environment 100 is depicted as including a number of network access apparatuses 102a-102c that are networked to each other in one of a local area network (LAN), a wide area network (WAN), a metropolitan area network (MAN), etc. Although not shown, the network environment 100 includes a connection to the Internet, either through the network access apparatuses 102a-102b or through another device (not shown) in the network environment 100, in which the various devices form a network. Generally speaking, the network access apparatuses 102a-102c comprise apparatuses that function to allow or deny access by the client devices 110a-110c to a network, such as, the Internet, an intranet, etc. In this regard, the network access apparatuses 102a-102c may comprise switches, routers, wireless access points, wireless controllers, hubs, bridges, servers, etc.

According to an example, the network access apparatuses 102a-102c are positioned at an edge of the network, i.e., where the client devices 110a-110c connect to the network. In this example, the network access apparatuses 102a-102c are to process packets at the entry points through which the packets are received into the network. As such, the network access apparatuses 102a-102c may intercept certain types of packets prior to the packets being introduced further into the network, which may reduce the amount of bandwidth required to propagate the certain types of packets through the network. In other examples, the network access apparatuses 102a-102c may be positioned at various other locations in the network environment 100.

The client devices 110a-110c comprise personal computers, servers, laptop computers, tablet computers, cellular telephones, or any other electronic device that may be used to access the network environment 100. In addition, the client devices 110a-110c may communicate with the network access apparatuses 102a-102c through any suitable wired or wireless communication link. An example of a suitable wired communications link includes a connection established through an Ethernet link or other physical connection. Examples of suitable wireless communications links include connections established through an 802.11 link, a Bluetooth™ link, infrared communication, etc. In this regard, the network access apparatuses 102a-102c comprise equipment to enable either or both of wired and wireless communications with the client devices 110a-110c.

The network access apparatuses 102a and 102b are also depicted as each including a network access module 104 and a control module 106. The network access modules 104 are to receive packets from the client devices 110a-110c and may perform a forwarding function on the received packets. The forwarding function may comprise, for instance, identifying a destination address of the packets and forwarding the packets to the identified destination address. In addition, the network access modules 104 are to process the packets to determine whether the packets comprise a predetermined type of communication. The predetermined type of communication may include any detectable protocol and/or pattern. By way of example, the predetermined type of communication may comprise at least one of a Domain Name Service (DNS) request, a new IP flow, a predetermined type of application, a packet received from a predetermined type of device, etc. Thus, for instance, the network access module 104 may process the packets to identify application patterns, device behavior patterns, etc.

In response to the packets comprising a type of communication other than the predetermined type of communication, the network access modules 104 perform the forwarding function on the packets by forwarding the packets to their respective destinations or to other network access apparatuses in the network environment 100. However, in response to the packets comprising a predetermined type of communication, the control modules 106 are to inspect the packets to determine whether a feature of the packets matches a configuration of a plurality of predetermined configurations.

The features and configurations may comprise, for instance, client device 110a-110c identifiers (such as MAC addresses, IP addresses, etc.), identifiers of applications running on the client devices 110a-110c (such as, TCP port numbers, etc.), IP addresses of websites known and/or suspected as being associated with a threat, etc. The threats may comprise, for instance, botnets, malware, spyware, Trojans, worms, denial of service attacks, spam generation, etc. In any regard, and according to an example, each of the control modules 106 includes a configuration structure that contains the plurality of predetermined configurations. In addition, the control modules 106 communicate with an intelligence feed service 120, for instance, over the Internet, to receive updates on the predetermined configurations, such that the predetermined configurations are kept up-to-date and therefore relevant. More particularly, the intelligence feed service 120 collects configurations, such as, domain names, IP addresses, etc., of security threats and communicates the collected configurations to the control modules 106. In one example, the intelligence feed service 120 communicates updates of newly identified predetermined configurations at set intervals of time, such as, every couple of hours. An example of a suitable intelligence feed service 120 is DVLabs™ of the Hewlett Packard Company™.

If a control module 106 determines that the determined feature of the packets match a configuration of the plurality of configurations, the control modules 106 are to perform a predefined action on the plurality of packets. The predefined action comprises at least one of modifying the packets to change content of the packets, re-routing the packets, dropping the packets, reconfiguring the network access module 104, etc. Modifying the packets may comprise, for instance, changing the order in which the packets are sent out of the network access apparatus 102a, attaching additional data to the packets, etc. In addition or alternatively, modifying the packets may comprise modifying the actual content of the packets in line with a predetermined policy. For instance, the packets may be compressed, for instance, converted to a symbol, and may be decompressed further down the line in the network.

According to a particular example, the control module 106 may determine that a client device 110a from which a set of IP packets originated is likely infected by a virus. In this example, the control module 106 is to take actions to substantially mitigate damage caused by the virus, such as, the communication of information contained in the client device 110a, the spread of the virus to other devices in the network environment 100, etc. For instance, the control module 106 is to at least one of reconfigure the network access module 104 to block network access by the infected client device 110a, to quarantine the infected client device 110a, to block the infected client device's access to a particular server, to block the infected client device's access to the Internet, etc. In addition, the control module 106 is to send an alert to a network management station 130 to report that the client device 110a is infected with a virus. The network management station 130 may comprise a server or a set of machine readable instructions on a server or other network apparatus that is to track the security statuses of the client devices 110a-110c. According to an example, the network management station 130 informs the network access apparatuses 102a-102c that packets from infected client devices are to be blocked.

As shown in FIG. 1, one of the network access apparatuses 102c is depicted as including a network access module 104, but does not include a control module 106. In addition, the network access module 104 of that network access apparatus 102c is depicted as being in communication with the network access module 104 in another network access apparatus 102b that includes a control module 106. As such, the network access module 104 in the network access apparatus 102c may communicate packets that originate from a client device 110c to a network access module 104 that is to determine whether the packets comprise a predetermined type of communication and to forward those types of packets to a control module 106. In addition, or alternatively, the network access module 104 in the network access apparatus 102c includes a set of instructions to determine whether the received packets comprise a predetermined type of communication and to forward the packets to a control module 106 in another network access apparatus 102b. In this regard, the control module(s) 106 may receive and process packets from network access modules 104 of multiple network access apparatuses.

According to an example, instead of processing all of the received packets to determine whether the packets comprise a predetermined type of communication, the network access modules 104 are to process only a sampled subset of the plurality of packets. By processing only a sampled subset of the received plurality of packets, the network access apparatuses 102a-102c may perform the packet processing operations without experiencing significant performance loss or expense.

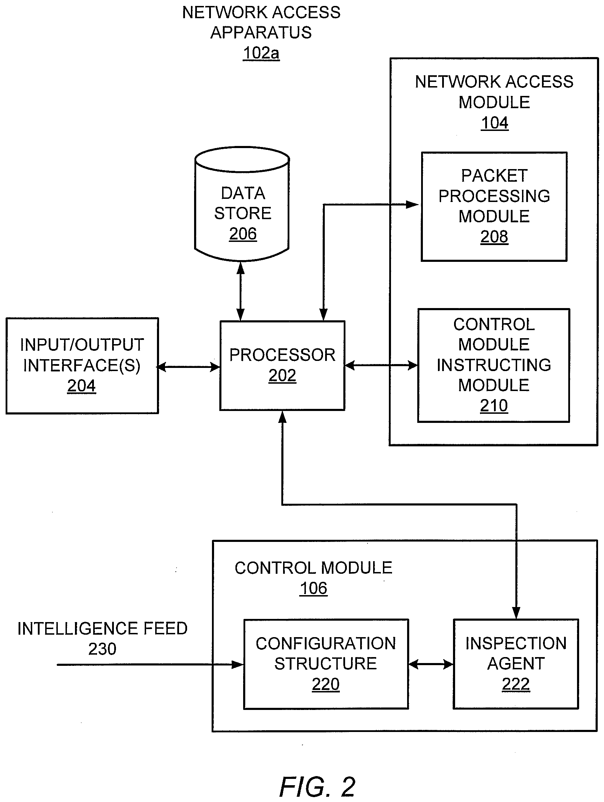

Turning now to FIG. 2, there is shown a simplified block diagram of a network access apparatus 102a depicted in FIG. 1, according to an example. The block diagram depicted in FIG. 2 more particularly depicts components of the network access apparatus 102a. It should be readily apparent that the diagram depicted in FIG. 2 represents a generalized illustration and that other components may be added or existing components may be removed, modified or rearranged without departing from a scope of the network access apparatus 102a.

The network access apparatus 102a is depicted as including a network access module 104, a processor 202, an input/output interface(s) 204, and a data store 206. The network access module 104 is also depicted as including a packet processing module 208 and a control module instructing module 210. The processor 202, which may comprise a microprocessor, a micro-controller, an application specific integrated circuit (ASIC), and the like, is to perform various processing functions in the network access network access apparatus 102a. One of the processing functions includes invoking or implementing the modules 208-210 of the network access module 104 as discussed in greater detail herein below.

The control module 106 is depicted as including a configuration structure 220 and an inspection agent 222. According to an example, the processor 202 is to control operations of the inspection agent 222. In another example, however, the inspection agent 222 includes a separate processor (not shown), which may comprise any of the types of processors discussed above with respect to the processor 202.

According to an example, the network access module 104 comprises a hardware device, such as, a circuit or multiple circuits arranged on a board. In this example, the modules 208-210 comprise circuit components or individual circuits. According to another example, the network access module 104 comprises a volatile or non-volatile memory, such as dynamic random access memory (DRAM), electrically erasable programmable read-only memory (EEPROM), magnetoresistive random access memory (MRAM), Memristor, flash memory, floppy disk, a compact disc read only memory (CD-ROM), a digital video disc read only memory (DVD-ROM), or other optical or magnetic media, and the like. In this example, the modules 208-210 comprise software modules stored in the network access module 104. According to a further example, the modules 208-210 comprise a combination of hardware and software modules.

According to an example, the control module 106 comprises a hardware device, such as, a circuit or multiple circuits arranged on a board. In this example, the inspection agent 222 comprises a circuit component. In this example, the inspection agent 222 may be integrated on a common circuit board with the modules 208-210 or on a separate circuit board from the modules 208-210. According to another example, the inspection agent 222 comprises a volatile or non-volatile memory, such as dynamic random access memory (DRAM), electrically erasable programmable read-only memory (EEPROM), magnetoresistive random access memory (MRAM), Memristor, flash memory, floppy disk, a compact disc read only memory (CD-ROM), a digital video disc read only memory (DVD-ROM), or other optical or magnetic media, and the like. in this example, the inspection agent 222 comprises a software module that may be stored in a common memory with the modules 208-210. According to a further example, the modules inspection agent 222 comprises a combination of hardware and software modules.

The input/output interface(s) 204 may comprise a hardware and/or a software interface. In this regard, the input/output interface(s) 204 may comprise either or both of hardware and software components that enable receipt and transmission of IP packets. Thus, for instance, the input/output interface(s) 204 comprise physical ports, such as, Ethernet ports, optical fiber ports, etc., into which cables are to be physically inserted. In another example, the input/output interface(s) 204 comprise equipment to enable wireless communication of IP packets, such as, equipment to enable Wi-Fi™, Bluetooth™, etc.

In any regard, the network access module 104 is to receive packets from the client devices 110a-110c through the input/output interface(s) 204. The processor 120 may also store the received packets in the data store 206 and may use the data in implementing the modules 208-210, and in certain examples, the inspection agent 222. The data store 206 comprises volatile and/or non-volatile memory, such as DRAM, EEPROM, MRAM, phase change RAM (PCRAM), Memristor, flash memory, and the like. In addition, or alternatively, the data store 206 comprises a device that is to read from and write to a removable media, such as, a floppy disk, a CD-ROM, a DVD-ROM, or other optical or magnetic media.

The configuration structure 220 has stored thereon or otherwise contains a plurality of predetermined configurations against which features of packets are compared, as further discussed herein. The configuration structure 220 comprises at least one of a database, a set of filters, a set of signatures, feeds, etc. In this regard, the configuration structure 220 may be loaded directly onto a memory array, into a database, etc. In addition, the configuration structure 220 is to receive an intelligence feed 230, for instance, from the intelligence feed service 120 (FIG. 1). The intelligence feed 230 may include information pertaining to the predetermined configurations contained in the configuration structure 220, for instance, updates to the predetermined configurations. In addition, the configuration structure 220 may receive the information on a substantially periodic basis to keep the predetermined configurations contained in the configuration structure 220 relevant, for instance, with changing data landscapes.

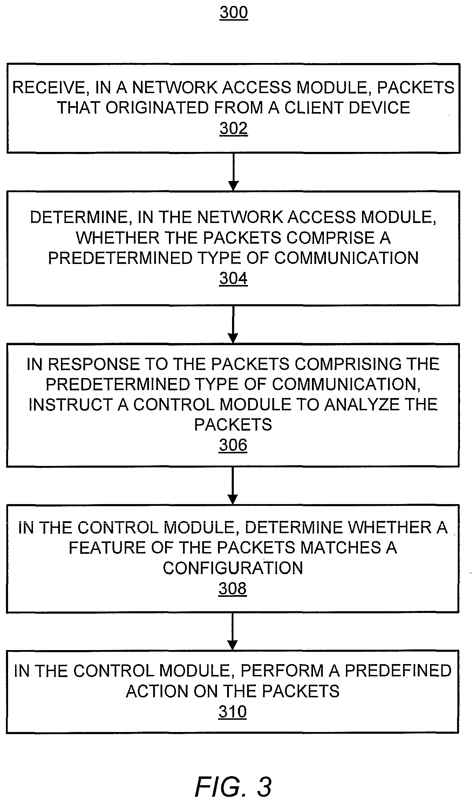

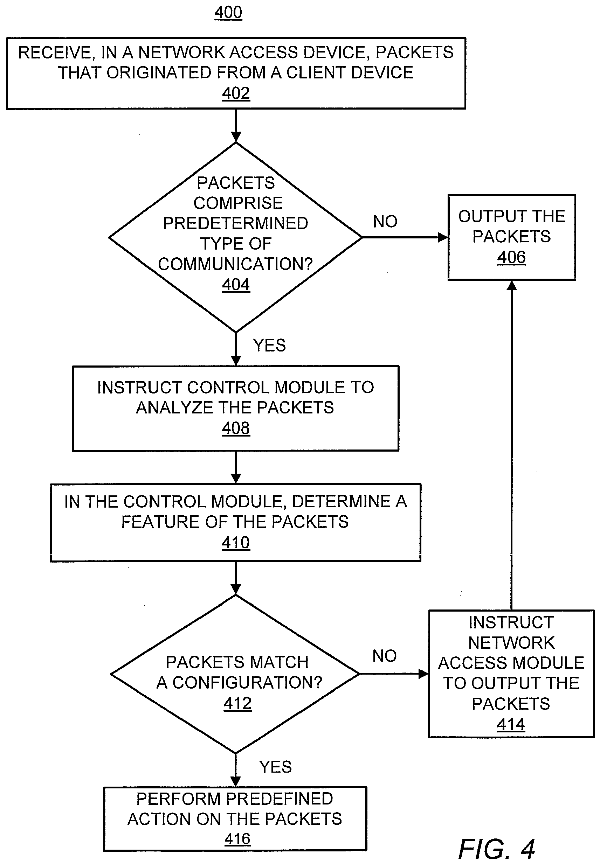

Various manners in which the network access module 104 and the control module 106 may be implemented are discussed in greater detail with respect to the methods 300 and 400 respectively depicted in FIGS. 3 and 4. FIGS. 3 and 4, more particularly, depict respective flow diagrams of methods 300 and 400 for processing packets in a network, according to two examples. It should be apparent to those of ordinary skill in the art that the methods 300 and 400 represent generalized illustrations and that other steps may be added or existing steps may be removed, modified or rearranged without departing from scopes of the methods 300 and 400. Although particular reference is made to the network access apparatuses 102a-102c depicted in FIGS. 1 and 2 as comprising an apparatus and/or a set of machine readable instructions that may perform the operations described in the methods 300 and 400, it should be understood that differently configured apparatuses and/or machine readable instructions may perform the methods 300 and 400 without departing from scopes of the methods 300 and 400.

Generally speaking, the methods 300 and 400 may be implemented to process packets in a network environment 100 to perform application and device fingerprinting, in combination with threat detection. In addition, the methods 300 and 400 may be implemented in a plurality of network access apparatuses 102a-102c positioned at the edge of a network to therefore intercept packets as the packets are introduced into the network by the client devices 110a-110c and substantially prevent propagation of certain types of packets through the network.

With reference first to method 300 in FIG. 3, at block 302, a plurality of packets are received in a network access module 102a from a client device 110a, for instance, through the input/output interface(s) 204. The network access module 102a may receive the packets directly from the client device 110a or from another network access module. In any regard, the packets may comprise a request by the client device 110a for access to a particular website or other type of access into the network.

At block 304, a determination is made as to whether the packets comprise a predetermined type of communication, for instance, by the packet processing module 208. The predetermined type of communication may include any detectable protocol and/or pattern, as discussed in greater detail herein above. According to an example, the packet processing module 208 may make the determination at block 304 through an analysis of information contained in the packets. For instance, the packet processing module 208 many analyze the information contained in the headers of the packets to determine the detectable protocol and/or pattern of the packets.

At block 306, in response to the packets comprising the predetermined type of communication, the control module 106 is instructed to analyze the packets, for instance, by the control module instructing module 210. More particularly, the control module instructing module 210 instructs the inspection agent 222 of the control module 106 to analyze the packets. In instances where the control module 106 is integrated with the network access module 104, the control module instructing module 210 may simply instruct the inspection agent 222 to analyze the packets stored in the data store 206. Alternatively, and in instances where the control module 106 comprises a component separate from the network access module 104, the control module instructing module 210 may encapsulate the packets and forward the encapsulated packets to the control module 106. In this example, the inspection agent 222 may store the packets in a memory (not shown) of the control module 106.

At block 308, in the control module 106, a determination is made as to whether a feature of the packets matches a configuration of a plurality of predetermined configurations, for instance, by the inspection agent 222. More particularly, the inspection agent 222 makes this determination by determining whether a feature of the packets matches a configuration of the plurality of predetermined configurations contained in the configuration structure 220. In instances where the predetermined configurations are stored in the configuration structure 220, the inspection agent 222 may make this determination by comparing the feature of the packets with the stored predetermined configurations. In instances where the configuration structure 220 comprises a set of filters corresponding to the predetermined configurations, the inspection agent 222 may make this determination by performing a filtering operation on the feature of the packets with respect to the filters contained in the configuration structure 220.

At block 310, in the control module 106, a predefined action is performed on the packets, for instance, by the inspection agent 222. Particularly, the predefined action comprises at least one of instructing the network access module 104 to output the packets, modifying the plurality of packets to change content of the plurality of packets, re-routing the plurality of packets, dropping the plurality of packets, reconfiguring the network access module 104, etc. The determination as to which of the predefined actions is performed may be based upon the determination made at block 308 as to whether a feature of the packets matches a configuration of the plurality of predetermined configurations.

Turning now to the method 400 in FIG. 4, there is shown a more detailed flow diagram of the method 300 for processing packets depicted in FIG. 3.

At block 402, a plurality of packets are received in a network access module 102a from a client device 110a as discussed above with respect to block 302 in FIG. 3. At block 404, a determination as to whether the packets comprise a predetermined type of communication is made as discussed above with respect to block 304. In response to a determination that the packets do not comprise the predetermined type of communication, the network access module 104 performs a forwarding function on the packets, for instance, determines the destination address for the packets and outputs the packets as indicated at block 406. For instance, the network access module 104 enables the client device 110a to access the website requested by the client device 110a.

According to an example, at block 404, instead of processing all of the received packets to determine whether the packets comprise a predetermined type of communication, the packet processing module 208 processes only a sampled subset of the plurality of packets. The sampled subset may comprise any reasonably suitable subset of all of the packets that the network access module 104 receives, such as, a predetermined percentage of all of the packets, the packets that have been received at predefined intervals of time, etc.

In response to a determination that the packets comprise the predetermined type of communication, at block 408, the control module 106 is instructed to analyze the packets, for instance, as discussed above with respect to block 306. In addition, at block 410, the inspection agent 222 determines a feature of the packets, which may comprise, for instance, a signature of an application, a signature of a device, an IP address of a website identified in the packets, etc.

At block 412, a determination as to whether the feature matches the configuration of a plurality of predetermined configurations is made, for instance, as discussed above with respect to block 308. According to an example, the inspection agent 222 makes this determination by comparing the feature determined at block 410 with a plurality of predetermined configurations contained in a configuration structure 220. As discussed above, the configuration structure 220 is to be updated substantially periodically and thus, the analysis of the feature of the packets may be performed on a relatively up-to-date set of predetermined configurations. If the feature of the packets does not match any of the configurations of the plurality of predetermined configurations contained in the configuration structure 220, at block 414, the inspection engine 222 instructs the network access module 104 to output the packets. In addition, at block 406, the network access module 104 outputs the packets to, for instance, establish a connection between the client device 110a and the requested website.

If the feature of the packets matches a configuration of the plurality of predetermined configurations contained in the configuration structure 220, at block 416, a predefined action is performed on the packets, for instance, by the inspection agent 222, as discussed above with respect to block 310. According to an example, the inspection agent 222 sends an alert to the network management system 130 to inform the network management system 130 of the action performed on the packets. By way of particular example, the network management station 130 may communicate an indication that the client device 110a has been infected to the network access apparatuses 102b-102c to enable those network access apparatuses 102b-102c to also block network access by the infected client device 110a.

Some or all of the operations set forth in the methods 300 and 400 may be contained as a utility, program, or subprogram, in any desired computer accessible medium. In addition, the methods 300 and 400 may be embodied by machine readable instructions, which may exist in a variety of forms both active and inactive. For example, they may exist as source code, object code, executable code or other formats. Any of the above may be embodied on a non-transitory computer readable storage medium. Examples of non-transitory computer readable storage media include conventional computer system RAM, ROM, EPROM, EEPROM, and magnetic or optical disks or tapes. It is therefore to be understood that any electronic device capable of executing the above-described functions may perform those functions enumerated above.

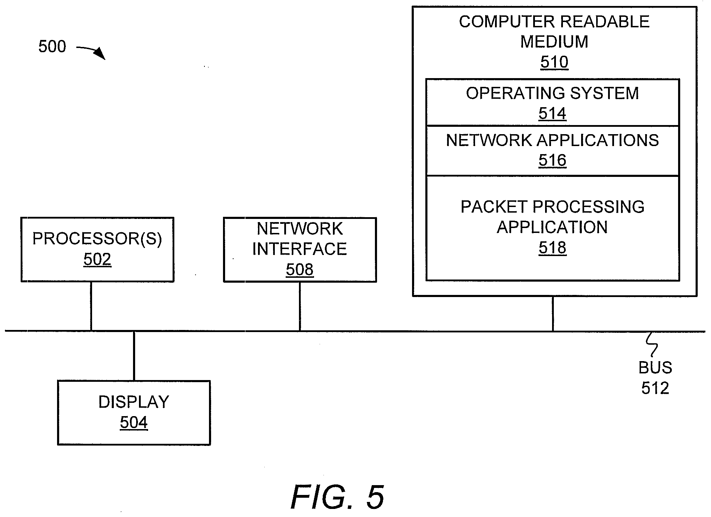

Turning now to FIG. 5, there is shown a schematic representation of a computing device 500, which may be employed to perform various functions of the network access apparatus 102a depicted in FIGS. 1 and 2, according to an example. The computing device 500 includes a processor 502, such as the processor 202; a display 504, such as but not limited to a monitor; a network interface 508, such as but not limited to a Local Area Network LAN, a wireless 802.11x LAN, a 3G/4G mobile WAN or a WiMax WAN; and a computer-readable medium 510. Each of these components is operatively coupled to a bus 512. For example, the bus 512 may be an EISA, a PCI, a USB, a FireWire, a NuBus, or a PDS.

The computer readable medium 510 comprises any suitable medium that participates in providing instructions to the processor 502 for execution. For example, the computer readable medium 510 may be non-volatile media. The operating system 514 may also perform basic tasks such as but not limited to recognizing receipt of packets, transmitting the packets to their destination addresses, and managing traffic on the bus 512. The network applications 516 include various components for establishing and maintaining network connections, such as but not limited to machine readable instructions for implementing communication protocols including TCP/IP, HTTP, Ethernet, USB, and FireWire.

The packet processing application 518 provides various components for processing packets as discussed above with respect to the methods 300 and 400 in FIGS. 3 and 4. The packet processing application 518 may thus comprise the packet processing module 208 and the control module instructing module 210. In certain examples, the packet processing application 510 also includes the inspection agent 222. In this regard, the packet processing application 518 may include modules that receive a plurality of packets that originated from the client device 110a, determine whether the packets comprise a predetermined type of communication, in response to the packets comprising the predetermined type of communication, instruct a control module 106 to analyze the packets, and in the control module 106, determine a feature of the received packets, determine whether the feature matches a configuration of a plurality of predetermined configurations, and perform a predefined action on the packets in response to a determination that the feature of the packets match the configuration.

In certain examples, some or all of the processes performed by the application 518 may be integrated into the operating system 514. In certain examples, the processes may be at least partially implemented in digital electronic circuitry, or in computer hardware, machine readable instructions (including firmware and software), or in any combination thereof, as also discussed above.

What has been described and illustrated herein are examples of the disclosure along with some variations. The terms, descriptions and figures used herein are set forth by way of illustration only and are not meant as limitations. Many variations are possible within the scope of the disclosure, which is intended to be defined by the following claims -- and their equivalents -- in which all terms are meant in their broadest reasonable sense unless otherwise indicated.

## Claims

1. A network access apparatus, connectable to a network, (102) comprising:
an interface (204) to receive a plurality of packets that originate from a client device (110);
a control module (106);
a network access module (104) to perform a forwarding function on the plurality of packets, to determine whether the received plurality of packets comprise a predetermined type of communication, and to instruct the control module (106) to analyze the plurality of packets in response to the plurality of packets being determined as comprising the predetermined type of communication, and
wherein the control module (106) is to determine a feature of the plurality of packets received from the network access module (104), to determine whether the feature matches a configuration of a plurality of predetermined configurations, and to perform a predefined action on the plurality of packets in response to the feature matching the configuration; and
a processor (202) to implement the control module (106) and the network access module (104), wherein said forwarding function allows access to the network (100) by the client device (110); **characterised in that** the control module (106) is to determine that the client device (110) is infected by a network threat in response to the feature matching the configuration, to reconfigure the network access module (104) to block access to the network (100) by the client device (110), and to act to inform a number of other network access apparatuses (102) to block packets from the client device (110).

2. The network access apparatus (102) according to claim 1, wherein the control module (106) further comprises:
an inspection agent (222); and
a configuration structure (220) that contains the plurality of predetermined configurations,
wherein the inspection agent (222) is to compare the feature of the plurality of packets with the configurations contained in the configuration structure (220) to determine whether the feature matches the configuration, and wherein the configuration structure is to receive updates pertaining to the plurality of predetermined configurations from an intelligence feed service.

3. The network access apparatus (102) according to claim 2, wherein the configuration structure (220) comprises at least one of a database, a set of filters, a set of signatures, and a plurality of feeds.

4. The network access apparatus (102) according to claim 1, wherein the network access module (104) comprises equipment to control access by the client device (110) to the network (100) and communication of packets that originate from the client device (110) to an intended destination address and wherein the network access module (104) is further to output the plurality of packets to a destination address identified in the plurality of packets in response to the plurality of packets not comprising the predetermined type of communication.

5. The network access apparatus (102) according to claim 1, wherein the network access module (104) is further to process only a sampled subset of the plurality of packets received through the interface (204) and to determine whether the plurality of packets in the sampled subset of the plurality of packets comprise the predetermined type of communication.

6. The network access apparatus (102) according to claim 1, wherein the predefined action comprises at least one of modifying the plurality of packets to change content of the plurality of packets, re-routing the plurality of packets, dropping the plurality of packets, and reconfiguring the network access module (104).

7. The network access apparatus (102) according to claim 1, wherein the control module (106) is to receive a second plurality of packets from a second network access module that is contained in a second network access apparatus, and wherein the control module is to further analyze the second plurality of packets to determine whether the predetermined action is to be taken on the second plurality of packets received from the second client device.

8. A method (300) for processing packets in a network, said method, performed at a first network access apparatus, comprising:
receiving (302) a plurality of packets that originate from a client device;
determining (304) whether the plurality of packets comprise a predetermined type of communication;
in response to the plurality of packets not comprising the predetermined type of communication, performing (306) a forwarding function on the plurality of packets;
in response to the plurality of packets comprising the predetermined type of communication, determining (308) whether a feature of the plurality of packets matches a configuration of a plurality of predetermined configurations; and
in response to a determination that the feature of the plurality of packets matches the configuration, performing (310) a predefined action on the plurality of packets, wherein performing (306) a forwarding function on the plurality of packets comprises allowing access to the network by the client device, **characterised in that**, in response to the determination that the feature of the plurality of packets matches the configuration, the method comprises determining that the client device is infected by a network threat, reconfiguring the network access module to block access to the network by the client device, and informing a number of other network access apparatuses to block packets from the client device.

9. The method (300) according to claim 8, further comprising:
receiving a feed containing updates to the plurality of predetermined configurations from an intelligence feed service; and
updating the plurality of predetermined configurations based upon the received feed.

10. The method (300) according to claim 8, further comprising:
sampling a subset of the plurality of packets; and
wherein determining whether the packets comprise a predetermined type of communication further comprises determining whether the sampled subset of the plurality of packets comprise the predetermined type of communication.

11. The method (300) according to claim 8, wherein determining whether a feature of the plurality of packets matches a configuration of the plurality of predetermined configurations is implemented by a control module in the first network access apparatus, said method further comprising:
in the control module in the first network access apparatus, determining whether a feature of a second plurality of packets received from a second network apparatus matches a configuration of the plurality of predetermined configurations, and in response to a determination that the feature of the plurality of packets matches the configuration, performing a predefined action on the second plurality of packets.

12. The method (300) according to claim 8, wherein performing a predefined action on the plurality of packets further comprises at least one of modifying the plurality of packets to change content of the plurality of packets, re-routing the plurality of packets, dropping the plurality of packets, and reconfiguring a network access module.

13. A non-transitory computer readable storage medium on which is stored machine readable instructions, that when executed by a processor are to implement a method for processing packets in a network, said method performed at a network access apparatus, said machine readable instructions comprising code to:
receive a plurality of packets that originate from a client device;
determine whether the plurality of packets comprise a predetermined type of communication;
in response to the plurality of packets not comprising the predetermined type of communication, perform a forwarding function on the plurality of packets;
in response to the plurality of packets comprising the predetermined type of communication, determine whether a feature of the plurality of packets matches a configuration of a plurality of predetermined configurations; and
in response to a determination that the feature of the plurality of packets matches the configuration, perform a predefined action on the plurality of packets,
perform the forwarding function on the plurality of packets by allowing access to the network by the client device, the non-transitory computer readable storage medium being **characterised in that** the machine readable instructions comprise code to:
in response to the determination that the feature of the plurality of packets matches the configuration, determine that the client device is infected by a network threat, reconfigure the network access module to block access to the network by the client device, and act to inform a number of other network access apparatuses to block packets from the client device.

14. The non-transitory computer readable storage medium of claim 13, said machine readable instructions further comprising code to:
receive a feed containing updates to the plurality of predetermined configurations from an intelligence feed service; and
update the plurality of predetermined configurations based upon the received feed.

15. The non-transitory computer readable storage medium of claim 13, said machine readable instructions further comprising code to:
sample a subset of the plurality of packets; and
determining whether the sampled subset of the plurality of packets comprise the predetermined type of communication.

## Patentansprüche

1. Netzwerkzugriffsvorrichtung, die an ein Netzwerk angeschlossen werden kann, (102) umfassend:
Schnittstelle (204) zum Empfangen einer Vielzahl von Paketen, die von einem Client-Gerät (110) stammen;
Steuerungsmodul (106);
Netzwerkzugriffsmodul (104), um eine Weiterleitungsfunktion auf die Vielzahl von Paketen auszuführen, um zu ermitteln, ob die empfangene Vielzahl von Paketen einen vorgegebenen Kommunikationstyp enthält, und um das Steuerungsmodul (106) anzuweisen, die Vielzahl von Paketen in Reaktion auf die Vielzahl von Paketen, von denen ermittelt wurde, dass sie den vorgegebenen Kommunikationstyp umfassen, zu analysieren, und
wobei das Steuerungsmodul (106) dazu dient, ein Merkmal der Vielzahl von Paketen, die vom Netzwerkzugriffsmodul (104) empfangen wurden, zu ermitteln, zu ermitteln, ob das Merkmal einer Konfiguration aus einer Vielzahl von vorgegebenen Konfigurationen entspricht, und eine vorkonfigurierte Aktion auf die Vielzahl von Paketen in Reaktion darauf, dass das Merkmal der Konfiguration entspricht, auszuführen; und
Prozessor (202) zum Implementieren des Steuerungsmoduls (106) und des Netzwerkzugriffsmoduls (104),
wobei die genannte Weiterleitungsfunktion Zugriff auf das Netzwerk (100) durch das Client-Gerät (110) gestattet, **dadurch gekennzeichnet, dass** das Steuerungsmodul (106) dazu dient, in Reaktion darauf, dass das Merkmal der Konfiguration entspricht, zu ermitteln, dass das Client-Gerät (110) durch eine Netzwerkbedrohung infiziert ist, das Netzwerkzugriffsmodul (104) neu zu konfigurieren, um den Zugriff auf das Netzwerk (100) durch das Client-Gerät (110) zu blockieren, und tätig zu werden, um eine Anzahl von anderen Netzwerkzugriffsvorrichtungen (102) darüber zu informieren, Pakete vom Client-Gerät (110) zu blockieren.

2. Netzwerkzugriffsvorrichtung (102) nach Anspruch 1, wobei das Steuerungsmodul (106) weiterhin umfasst:
Inspektionsmittel (222); und
Konfigurationsstruktur (220), die die Vielzahl der vorgegebenen Konfigurationen enthält,
wobei das Inspektionsmittel (222) dazu dient, das Merkmal der Vielzahl von Paketen mit den in der Konfigurationsstruktur (220) enthaltenen Konfigurationen zu vergleichen, um zu ermitteln, ob das Merkmal der Konfiguration entspricht, und wobei die Konfigurationsstruktur dazu dient, von einem Intelligence-Feed-Service Aktualisierungen in Bezug auf die Vielzahl von vorgegebenen Konfigurationen zu erhalten.

3. Netzwerkzugriffsvorrichtung (102) nach Anspruch 2, wobei die Konfigurationsstruktur (220) mindestens eine Datenbank, einen Satz von Filtern, einen Satz von Signaturen und eine Vielzahl von Feeds umfasst.

4. Netzwerkzugriffsvorrichtung (102) nach Anspruch 1, wobei das Netzwerkzugriffsmodul (104) eine Ausrüstung zur Steuerung des Zugriffs durch das Client-Gerät (110) auf das Netzwerk (100) und der Kommunikation von vom Client-Gerät (110) stammenden Paketen an eine vorgesehene Zieladresse umfasst, und wobei das Netzwerkzugriffsmodul (104) weiterhin dazu dient, die Vielzahl von Paketen an eine in der Vielzahl von Paketen identifizierte Zieladresse in Reaktion darauf, dass die Vielzahl von Paketen den vorgegebenen Kommunikationstyp nicht umfassen, auszugeben.

5. Netzwerkzugriffsvorrichtung (102) nach Anspruch 1, wobei das Netzwerkzugriffsmodul (104) weiterhin dazu dient, nur eine in die Stichprobe einbezogene Untermenge der Vielzahl von durch die Schnittstelle (204) empfangenen Paketen zu verarbeiten, und zu ermitteln, ob die Vielzahl von Paketen in der in die Stichprobe einbezogenen Untermenge der Vielzahl von Paketen den vorgegebenen Kommunikationstyp umfasst.

6. Netzwerkzugriffsvorrichtung (102) nach Anspruch 1, wobei die vorkonfigurierte Aktion mindestens ein Modifizieren der Vielzahl von Paketen zum Ändern des Inhalts der Vielzahl von Paketen, ein Umleiten der Vielzahl von Paketen, ein Abstoßen der Vielzahl von Paketen und/oder und ein Neukonfigurieren des Netzwerkzugriffsmoduls (104) umfasst.

7. Netzwerkzugriffsvorrichtung (102) nach Anspruch 1, wobei das Steuerungsmodul (106) dazu dient, eine zweite Vielzahl von Paketen von einem zweiten, in einer zweiten Netzwerkzugriffsvorrichtung enthaltenen Netzwerkzugriffsmodul zu empfangen, und wobei das Steuerungsmodul dazu dient, weiterhin die zweite Vielzahl von Paketen zu analysieren, um zu ermitteln, ob die vorgegebene Aktion für die zweite, vom zweiten Client-Gerät erhaltene Vielzahl von Paketen ergriffen werden soll.

8. Verfahren (300) zur Verarbeitung von Paketen in einem Netzwerk, wobei das genannte auf einer ersten Netzwerkzugriffsvorrichtung ausgeführte Verfahren Folgendes umfasst:
Empfangen (302) einer Vielzahl von Paketen, die von einem Client-Gerät stammen;
Ermitteln (304), ob die Vielzahl von Paketen einen vorgegebenen Kommunikationstyp umfasst;
in Reaktion darauf, dass die Vielzahl von Paketen den vorgegebenen Kommunikationstyp nicht umfassen, Ausführen (306) einer Weiterleitungsfunktion auf die Vielzahl von Paketen;
in Reaktion darauf, dass die Vielzahl von Paketen den vorgegebenen Kommunikationstyp umfassen, Ermitteln (308), ob ein Merkmal der Vielzahl von Paketen einer Konfiguration aus einer Vielzahl von vorgegebenen Konfigurationen entspricht; und
in Reaktion auf eine Ermittlung, dass das Merkmal der Vielzahl von Paketen der Konfiguration entspricht, Ausführen (310) einer vorkonfigurierten Aktion auf die Vielzahl von Paketen, wobei das Ausführen (306) einer Weiterleitungsfunktion auf die Vielzahl von Paketen das Gestatten des Zugriffs auf das Netzwerk durch das Client-Gerät umfasst, **dadurch gekennzeichnet, dass** das Verfahren in Reaktion auf eine Ermittlung, dass das Merkmal der Vielzahl von Paketen der Konfiguration entspricht, die Ermittlung, dass das Client-Gerät durch eine Netzwerkbedrohung infiziert ist, die Neukonfigurierung des Netzwerkzugriffsmoduls zum Blockieren des Zugriffs auf das Netzwerk durch das Client-Gerät und das Informieren einer Anzahl von anderen Netzwerkzugriffsvorrichtungen zum Blockieren von Paketen von dem Client-Gerät umfasst.

9. Verfahren (300) nach Anspruch 8, das weiterhin Folgendes umfasst:
Empfangen eines Feeds, der Aktualisierungen zur Vielzahl von vorgegebenen Konfigurationen von einem Intelligence-Feed-Service enthält; und
Aktualisieren der Vielzahl der vorgegebenen Konfigurationen basierend auf dem empfangenen Feed.

10. Verfahren (300) nach Anspruch 8, weiterhin umfassend:
Erstellen einer Stichprobe einer Untermenge aus der Vielzahl von Paketen; und
wobei das Ermitteln, ob die Pakete einen vorgegebenen Kommunikationstyp umfassen, weiterhin das Ermitteln umfasst, ob die in die Stichprobe einbezogene Untermenge der Vielzahl von Paketen den vorgegebenen Kommunikationstyp umfasst.

11. Verfahren (300) nach Anspruch 8, wobei das Ermitteln, ob ein Merkmal der Vielzahl von Paketen einer Konfiguration der Vielzahl von vorgegebenen Konfigurationen entspricht, durch ein Steuerungsmodul in der ersten Netzwerkzugriffsvorrichtung implementiert wird, wobei das genannte Verfahren weiterhin umfasst:
Ermitteln im Steuerungsmodul in der ersten Netzwerkzugriffsvorrichtung, ob ein Merkmal einer zweiten, von einer zweiten Netzwerkvorrichtung empfangenen Vielzahl von Paketen einer Konfiguration der Vielzahl von vorgegebenen Konfigurationen entspricht, und in Reaktion auf eine Ermittlung, dass das Merkmal der Vielzahl von Paketen der Konfiguration entspricht, Ausführen einer vorkonfigurierten Aktion auf die zweite Vielzahl von Paketen.

12. Verfahren (300) nach Anspruch 8, wobei das Ausführen einer vorkonfigurierten Aktion auf die Vielzahl von Paketen weiterhin mindestens ein Modifizieren der Vielzahl von Paketen zum Ändern des Inhalts der Vielzahl von Paketen, ein Umleiten der Vielzahl von Paketen, ein Abstoßen der Vielzahl von Paketen und/oder ein Neukonfigurieren des Netzwerkzugriffsmoduls umfasst.

13. Nichtflüchtiges, computerlesbares Speichermedium, auf dem maschinenlesbare Befehle gespeichert sind, die bei Ausführung durch einen Prozessor dazu dienen, ein Verfahren zur Verarbeitung von Paketen in einem Netzwerk zu implementieren, wobei das genannte Verfahren auf einer Netzwerkzugriffsvorrichtung ausgeführt wird, wobei die genannten maschinenlesbaren Befehle einen Code umfassen zum:
Empfangen einer Vielzahl von Paketen, die von einem Client-Gerät stammen;
Ermitteln, ob die Vielzahl von Paketen einen vorgegebenen Kommunikationstyp umfasst;
in Reaktion darauf, dass die Vielzahl von Paketen den vorgegebenen Kommunikationstyp nicht umfassen, Ausführen einer Weiterleitungsfunktion auf die Vielzahl von Paketen;
in Reaktion darauf, dass die Vielzahl von Paketen den vorgegebenen Kommunikationstyp umfassen, Ermitteln, ob ein Merkmal der Vielzahl von Paketen einer Konfiguration einer Vielzahl von vorgegebenen Konfigurationen entspricht; und
in Reaktion auf eine Ermittlung, dass das Merkmal der Vielzahl von Paketen der Konfiguration entspricht, Ausführen einer vorkonfigurierten Aktion auf die Vielzahl von Paketen,
Ausführen der Weiterleitungsfunktion auf die Vielzahl von Paketen durch Gestatten des Zugriffs auf das Netzwerk durch das Client-Gerät, wobei das nichtflüchtige, computerlesbare Speichermedium **dadurch gekennzeichnet ist, dass** die maschinenlesbaren Befehle einen Code umfassen zum:
in Reaktion auf eine Ermittlung, dass das Merkmal der Vielzahl von Paketen der Konfiguration entspricht, Ermitteln, dass das Client-Gerät durch eine Netzwerkbedrohung infiziert ist, Neukonfigurieren des Netzwerkzugriffsmoduls zum Blockieren des Zugriffs auf das Netzwerk durch das Client-Gerät, und Tätigwerden, um eine Anzahl von anderen Netzwerkzugriffsvorrichtungen darüber zu informieren, Pakete vom Client-Gerät zu blockieren.

14. Nichtflüchtiges, computerlesbares Speichermedium nach Anspruch 13, wobei die genannten maschinenlesbaren Befehle weiterhin Code umfassen zum:
Empfangen eines Feeds, der Aktualisierungen zur Vielzahl von vorgegebenen Konfigurationen von einem Intelligence-Feed-Service enthält; und
Aktualisieren der Vielzahl der vorgegebenen Konfigurationen basierend auf dem empfangenen Feed.

15. Nichtflüchtiges, computerlesbares Speichermedium nach Anspruch 13, wobei die genannten maschinenlesbaren Befehle weiterhin Code umfassen zum:
Erstellen einer Stichprobe einer Untermenge aus der Vielzahl von Paketen; und
Ermitteln, ob die in die Stichprobe einbezogene Untermenge der Vielzahl von Paketen den vorgegebenen Kommunikationstyp umfasst.

## Revendications

1. Appareil d'accès au réseau, pouvant être connecté à un réseau, (102) comprenant :
une interface (204) pour recevoir une pluralité de paquets qui proviennent d'un dispositif client (110) ;
un module de commande (106) ;
un module d'accès réseau (104) pour réaliser une fonction de transfert sur la pluralité de paquets, pour déterminer si la pluralité reçue de paquets comprend un type de communication prédéterminé et ordonner au module de commande (106) d'analyser la pluralité de paquets en réponse à la pluralité de paquets étant déterminés comme comprenant le type de communication prédéterminé, et
dans lequel le module de commande (106) sert à déterminer une caractéristique de la pluralité de paquets reçus du module d'accès réseau (104), pour déterminer si la caractéristique correspond à une configuration d'une pluralité de configurations prédéterminées, et pour réaliser une action prédéfinie sur la pluralité de paquets en réponse à la caractéristique correspondant à la configuration ; et
un processeur (202) pour mettre en oeuvre le module de commande (106) et le module de commande réseau (104),
dans lequel ladite fonction de transfert permet l'accès au réseau (100) par le dispositif client (110) ;
**caractérisé en ce que** le module de commande (106) sert à déterminer que le dispositif client (110) est infecté par une menace de réseau en réponse à la caractéristique correspondant à la configuration, reconfigurer le module d'accès réseau (104) pour bloquer l'accès au réseau (100) par le dispositif client (110) et prescrire à un certain nombre d'autres appareils d'accès réseau (102) de bloquer des paquets du dispositif client (110).

2. Appareil d'accès réseau (102) selon la revendication 1, dans lequel le module de commande (106) comprend en outre :
un agent d'inspection (222) ; et
une structure de configuration (220) qui contient la pluralité de configurations prédéterminées
dans lequel l'agent d'inspection (222) sert à comparer la caractéristique de la pluralité de paquets avec les configurations contenues dans la structure de configuration (220) pour déterminer si la caractéristique correspond à la configuration, et dans lequel la structure de configuration sert à recevoir des mises à jour concernant la pluralité de configurations prédéterminées à partir d'un service de données d'intelligence.

3. Appareil d'accès réseau (102) selon la revendication 2, dans lequel la structure de configuration (220) comprend au moins l'un parmi une base de données, un ensemble de filtres, un ensemble de signatures et une pluralité de données.

4. Appareil d'accès réseau (102) selon la revendication 1, dans lequel le module d'accès réseau (104) comprend un équipement pour commander l'accès par le dispositif client (110) au réseau (100) et la communication de paquets qui proviennent du dispositif client (110) vers une adresse de destination prévue et dans lequel le module d'accès réseau (104) sert en outre à émettre la pluralité de paquets vers une adresse de destination identifiée dans la pluralité de paquets en réponse à la pluralité de paquets ne comprenant pas le type de communication prédéterminé.

5. Appareil d'accès réseau (102) selon la revendication 1, dans lequel le module d'accès réseau (104) sert en outre à traiter uniquement un sous-ensemble échantillonné de la pluralité de paquets reçus à travers l'interface (204) et à déterminer si la pluralité de paquets dans le sous-ensemble échantillonné de la pluralité de paquets comprend le type de communication prédéterminé.

6. Appareil d'accès réseau (102) selon la revendication 1, dans lequel l'action prédéfinie comprend au moins l'un parmi la modification de la pluralité de paquets pour modifier le contenu de la pluralité de paquets, le réacheminement de la pluralité de paquets, le dépôt de la pluralité de paquets et la reconfiguration du module d'accès réseau (104).

7. Appareil d'accès réseau (102) selon la revendication 1, dans lequel le module de commande (106) sert à recevoir une seconde pluralité de paquets d'un second module d'accès réseau qui est contenu dans un second appareil d'accès réseau, et dans lequel le module de commande sert en outre à analyser la seconde pluralité de paquets pour déterminer si l'action prédéterminée doit être réalisée sur la seconde pluralité de paquets reçus du second dispositif client.

8. Procédé (300) de traitement de paquets dans un réseau, ledit procédé, exécuté au niveau d'un premier appareil d'accès réseau, comprenant :
la réception (302) d'une pluralité de paquets qui proviennent d'un dispositif client ;
le fait de déterminer (304) si la pluralité de paquets comprend ou non un type de communication prédéterminé ;
en réponse à la pluralité de paquets ne comprenant pas le type de communication prédéterminé, la réalisation (306) d'une fonction de transfert sur la pluralité de paquets ;
en réponse à la pluralité de paquets comprenant le type de communication prédéterminé, le fait de déterminer (308) si une caractéristique de la pluralité de paquets correspond à une configuration d'une pluralité de configurations prédéterminées ; et
en réponse à une détermination que la caractéristique de la pluralité de paquets correspond à la configuration, la réalisation (310) d'une action prédéfinie sur la pluralité de paquets,
dans lequel la réalisation (306) d'une fonction de transfert sur la pluralité de paquets comprend l'accès autorisé au réseau par le dispositif client,
**caractérisé en ce que**, en réponse à la détermination que la caractéristique de la pluralité de paquets correspond à la configuration, le procédé comprend la détermination que le dispositif client est infecté par une menace de réseau, la reconfiguration du module d'accès réseau pour bloquer l'accès au réseau par le dispositif client et la prescription à un certain nombre d'autres appareils d'accès réseau de bloquer des paquets du dispositif client.

9. Procédé (300) selon la revendication 8, comprenant en outre :
la réception de données contenant des mises à jour pour la pluralité de configurations prédéterminées à partir d'un service de données d'intelligence ; et
la mise à jour de la pluralité de configurations prédéterminées sur la base des données reçues.

10. Procédé (300) selon la revendication 8, comprenant en outre :
l'échantillonnage d'un sous-ensemble de la pluralité de paquets ; et
dans lequel le fait de déterminer si les paquets comprennent un type de communication prédéterminée comprend en outre le fait de déterminer si le sous-ensemble échantillonné de la pluralité de paquets comprend le type de communication prédéterminé.

11. Procédé (300) selon la revendication 8, dans lequel le fait de déterminer si une caractéristique de la pluralité de paquets correspond à une configuration de la pluralité de configurations prédéterminées est mis en oeuvre par un module de commande dans le premier appareil d'accès réseau, ledit procédé comprenant en outre :
dans le module de commande dans le premier appareil d'accès réseau, le fait de déterminer si une caractéristique d'une seconde pluralité de paquets reçus d'un second appareil de réseau correspond à une configuration de la pluralité de configurations prédéterminées, et en réponse à une détermination que la caractéristique de la pluralité de paquets correspond à la configuration, la réalisation d'une action prédéfinie sur la seconde pluralité de paquets.

12. Procédé (300) selon la revendication 8, dans lequel la réalisation d'une action prédéfinie sur la pluralité de paquets comprend en outre au moins l'un parmi la modification de la pluralité de paquets pour modifier le contenu de la pluralité de paquets, le réacheminent de la pluralité de paquets, le dépôt de la pluralité de paquets et la reconfiguration d'un module d'accès réseau.

13. Support de stockage non transitoire lisible par ordinateur stockant des instructions lisibles par ordinateur, qui lorsqu'elles sont exécutées par un processeur servent à mettre en oeuvre un procédé de traitement de paquets dans un réseau, ledit procédé effectué au niveau d'un appareil d'accès réseau, lesdites instructions lisibles par ordinateur comprenant un code pour :
recevoir une pluralité de paquets qui proviennent d'un dispositif client ;
déterminer si la pluralité de paquets comprend un type de communication prédéterminé ;
en réponse à la pluralité de paquets ne comprenant pas le type de communication prédéterminé, réaliser une fonction de transfert sur la pluralité de paquets ;
en réponse à la pluralité de paquets comprenant le type de communication prédéterminé, déterminer si une caractéristique de la pluralité de paquets correspond à une configuration d'une pluralité de configurations prédéterminées ; et
en réponse à une détermination que la caractéristique de la pluralité de paquets correspond à la configuration, réaliser une action prédéfinie sur la pluralité de paquets,
réaliser la fonction de transfert sur la pluralité de paquets en autorisant l'accès au réseau par le dispositif client, le support de stockage non transitoire lisible par ordinateur étant **caractérisé en ce que** les instructions lisibles par ordinateur comprennent un code pour :
en réponse à la détermination que la caractéristique de la pluralité de paquets correspond à la configuration, déterminer que le dispositif client est infecté par une menace de réseau, reconfigurer le module d'accès réseau pour bloquer l'accès au réseau par le dispositif client et ordonner à un certain nombre d'autres appareils d'accès réseau de bloquer des paquets du dispositif client.

14. Support de stockage non transitoire lisible par ordinateur selon la revendication 13, lesdites instructions lisibles par ordinateur comprenant en outre un code pour :
recevoir des données contenant des mises à jour pour la pluralité de configurations prédéterminées d'un service de données d'intelligence ; et
mettre à jour la pluralité de configurations prédéterminées sur la base des données reçues.

15. Support de stockage non transitoire lisible par ordinateur selon la revendication 13, lesdites instructions lisibles par ordinateur comprenant en outre un code pour :
échantillonner un sous-ensemble de la pluralité de paquets ; et
déterminer si le sous-ensemble échantillonné de la pluralité de paquets comprend le type de communication prédéterminé.
